Europäisches Patentamt

European Patent Office

Office européen des brevets

(11) Numéro de publication : **0 333 540 B1**

(12) **FASCICULE DE BREVET EUROPEEN**

(45) Date de publication du fascicule du brevet :
**25.11.92 Bulletin 92/48**

(51) Int. Cl.$^5$ : **F23N 5/10**, F16K 21/14,
F16K 31/02, G04F 3/00,
F16K 31/48

(21) Numéro de dépôt : **89400543.8**

(22) Date de dépôt : **27.02.89**

(54) **Robinet pour gaz équipé d'un système de sécurité à thermocouple, et appareil utilisant un tel robinet.**

(30) Priorité : **02.03.88 FR 8802641**

(43) Date de publication de la demande :
**20.09.89 Bulletin 89/38**

(45) Mention de la délivrance du brevet :
**25.11.92 Bulletin 92/48**

(84) Etats contractants désignés :
**AT BE CH DE ES GB GR IT LI LU NL SE**

(56) Documents cités :
**DE-A- 1 429 079**
**DE-A- 1 927 663**
**FR-A- 1 057 007**
**FR-A- 1 261 428**
**FR-A- 2 212 511**
**FR-A- 2 373 753**
**US-A- 2 599 151**

(73) Titulaire : **GAZ DE FRANCE**
**23, rue Philibert Delorme**
**F-75017 Paris (FR)**

(72) Inventeur : **Pistien, Jacques**
**1 Rue Lénine**
**F-93450 l'Ile Saint Denis (FR)**
Inventeur : **Grandveau, Gilles**
**47 Rue des Rossignols**
**F-95150 Taverny (FR)**

(74) Mandataire : **Durand, Yves Armand Louis et al**
**Cabinet Z. Weinstein 20, Avenue de Friedland**
**F-75008 Paris (FR)**

Jouve, 18, rue Saint-Denis, 75001 PARIS

## Description

La présente invention a essentiellement pour objet un robinet pour gaz équipé d'un système de sécurité à thermocouple.

Elle vise également un appareil, tel que par exemple une cuisinière, un four, ou une table chauffante utilisant un tel robinet.

On connaît déjà un robinet pour gaz équipé d'un système de sécurité à thermocouple et comprenant un corps muni d'une entrée et d'une sortie de gaz et dans lequel est agencé un clapet qui peut être actionné par un poussoir à l'encontre de la force d'un premier ressort associé à ce poussoir et d'un deuxième ressort associé au clapet et le sollicitant constamment en position de fermeture, de façon à pouvoir armer le clapet.

Plus précisément, le poussoir agit sur le clapet pour le maintenir en position d'ouverture, par le fait que le clapet se colle sur un électro-aimant associé à un thermocouple dans lequel passe un courant électrique produit par la flamme d'un appareil à gaz chauffant ce thermocouple.

En d'autres termes, si la soudure des deux éléments métalliques distincts constituant le thermocouple est chauffée par la flamme, il se crée un courant électrique de faible tension alimentant l'électro-aimant qui peut donc maintenir ouvert le clapet assurant l'alimentation en gaz de l'appareil.

Par contre, si l'on cesse de chauffer la soudure, c'est-à-dire si la flamme est par exemple soufflée et donc éteinte, il n'y a plus de production de courant, et l'électro-aimant ne retient plus le clapet qui revient, sous l'effet du ressort qui lui est associé, à la position fermée.

Toutefois, dans ce genre de robinet connu, il est nécessaire, pour armer le clapet, c'est-à-dire pour provoquer la retenue du clapet contre l'électro-aimant, de maintenir une pression sur le poussoir pendant une dizaine de secondes, c'est-à-dire pendant le temps nécessaire à l'échauffement du thermocouple pour qu'il soit capable de créer un courant susceptible de retenir le clapet. Ce problème est résolu si l'on considère le document FR-A-1 2 61 428 qui concerne une vanne de sécurité d'arrivée de gaz du type décrit dans le préambule de la revendication 1.

Par ailleurs, il est décrit dans le document US-A-2 599 151 une valve actionnable par un levier de commande d'un système qui permet de contrôler le retour à la position inactive après relâchement du levier.

La présente invention propose un robinet pour gaz perfectionné qui permet l'armement du clapet par un actionnement bref du poussoir, et cela à l'aide de moyens particulièrement simples, qui, en outre, sont sans influence sur le fonctionnement du robinet à la fermeture en cas d'extinction ou de soufflage de la flamme.

A cet effet, l'invention a pour objet un robinet pour gaz équipé d'un système de sécurité à thermocouple et comprenant un corps muni d'une entrée et d'une sortie de gaz et dans lequel est agencé un clapet qui peut être actionné par un poussoir à l'encontre de la force d'un premier ressort associé audit poussoir et d'un deuxième ressort associé au clapet et le sollicitant constamment en position de fermeture, de façon, qu'en actionnant le poussoir ledit clapet soit armé par retenue, en position d'ouverture, contre un électro-aimant associé au thermocouple dans lequel passe un courant produit par une flamme chauffant ce thermocouple, caractérisé en ce que le poussoir comporte une extrémité active de longueur variable grâce à un troisième ressort qui est interposé entre le fond d'un embout tubulaire et l'extrémité d'une tige formant le poussoir et susceptible de coulisser dans cet embout, lequel embout est monté coulissant au travers d'une cloison agencée dans le corps du robinet et sur laquelle prend appui une extrémité du premier ressort, dont l'autre extrémité prend appui sur un piston coulissant dans le corps et solidaire de la tige formant le poussoir.

Suivant une autre caractéristique de l'invention, le piston précité comporte une valve et un orifice calibré contrôlant le retour à la position inactive du poussoir sous l'effet du premier ressort, après relâchement dudit poussoir.

On comprend donc qu'il n'est plus nécessaire de maintenir un appui sur le poussoir qui retournera lentement à sa position inactive tout en maintenant le clapet en appui sur l'électro-aimant jusqu'à ce que le courant produit dans le thermocouple chauffé par la flamme soit suffisant pour retenir en position "collée", le clapet sur l'électro-aimant.

Mais d'autres caractéristiques et avantages de l'invention apparaitront mieux dans la description détaillée qui suit et se réfère aux dessins annexés, donnés uniquement à titre d'exemple, et dans lesquels :

La figure 1 est une vue schématique et en coupe axiale d'un robinet pour gaz conforme aux principes de l'invention et montré en position de fermeture, et

Les figures 2 à 4 sont des vues similaires à la figure 1 et illustrant les phases successives de fonctionnement de ce robinet.

Suivant l'exemple de réalisation représenté, un robinet pour gaz selon cette invention comprend un corps 1 muni d'une entrée 2 et d'une sortie 3 de gaz, et intérieurement muni d'un clapet 4 susceptible de coopérer avec un siège 5 pour laisser passer ou obturer l'arrivée de gaz par l'entrée 2, lequel clapet peut être actionné par une tige formant poussoir 6.

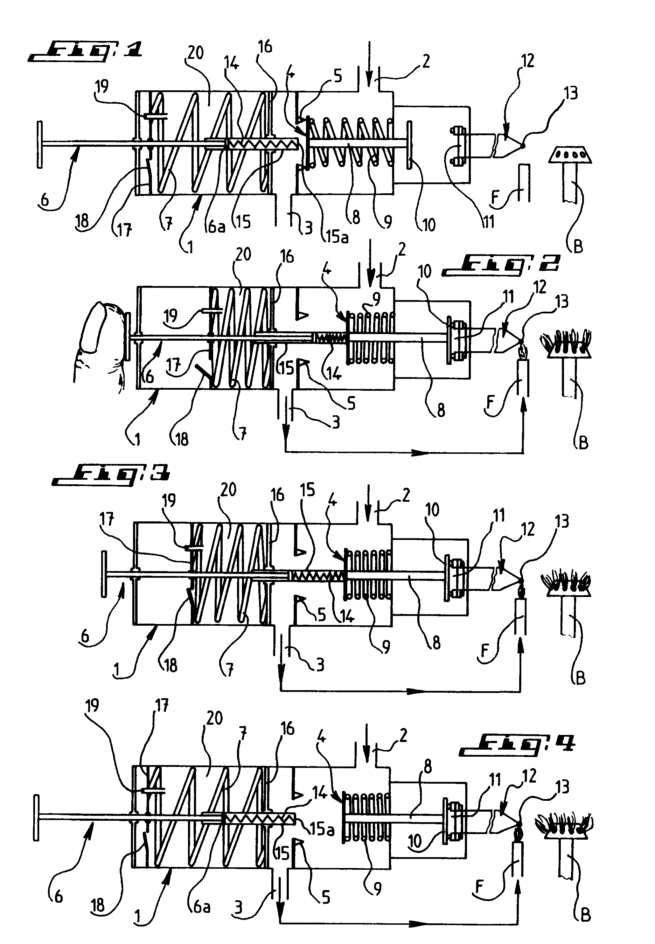

Ce poussoir peut agir à l'encontre de la force d'un premier ressort 7 entourant ledit poussoir, tandis que le clapet 4 comporte autour de sa tige 8 un deuxième ressort 9 sollicitant constamment le clapet en position de fermeture contre le siège 5, comme on le voit bien sur la figure 1.

La tige 8 du clapet 4 est munie à son extrémité opposée au clapet proprement dit, d'une pastille ou analogue 10 susceptible de coopérer avec un électro-aimant 11 électriquement relié à un thermocouple 12 composé de deux éléments métalliques distincts dont la soudure 13 peut être chauffée par la flamme d'une veilleuse F fonctionnant en continu à proximité de laquelle est disposé un brûleur B de type quelconque à allumeur.

Toutes les dispositions ci-dessus sont connues et ne nécessitent pas d'explications complémentaires.

Conformément à l'invention, un troisième ressort 14 est prévu au niveau de l'extrémité active du poussoir 6 de façon à conférer à celui-ci une longueur variable comme on le décrira plus loin à propos du fonctionnement.

Plus précisément, ce troisième ressort 14 est logé dans un embout tubulaire 15 coulissant au travers d'une cloison transversale 16 agencée à l'intérieur du robinet. Comme on le voit bien sur les figures, le troisième ressort 14 est interposé entre le fond 15a de l'embout 15 et l'extrémité 6a de la tige 6 formant poussoir, laquelle extrémité est susceptible de coulisser dans l'embout 15.

Le premier ressort 7 associé au poussoir 6 prend appui par une extrémité contre la cloison 16 et par son autre extrémité sur un piston 17 coulissant dans le corps 1 du robinet et solidaire de la tige de poussoir 6.

Ce piston 17 comprend une valve montrée schématiquement en 18, et un orifice calibré repéré schématiquement en 19 et contrôlant notamment le débit d'air pénétrant dans l'espace 20 entre le piston 17 et la cloison 16, lors du retour du poussoir 6 à sa position inactive, sous l'effet de la compression du premier ressort 7.

Mais, pour une meilleure compréhension de l'invention, on expliquera maintenant le fonctionnement du robinet qui vient d'être décrit en se reportant successivement aux figures 1 à 4.

On partira de la position visible sur la figure 1 et dans laquelle le robinet est fermé.

Dans cette position, le poussoir 6 se trouve en position arrière et inactive, le troisième ressort 14 est en position de repos et d'élongation maximum, et le clapet 4 est fermé sous l'effet du deuxième ressort 9, de sorte que la pastille 10 est éloignée de l'électro-aimant 11.

Dès lors, le gaz parvenant dans le robinet par l'entrée 2 ne peut pas sortir par la sortie 3, et la veilleuse F n'est pas allumée.

Pour allumer la veilleuse F, on ouvre le robinet par appui sur le poussoir 6, comme on le voit bien sur la figure 2.

Les ressorts 7, 14 et 9 seront alors comprimés, et la pastille 10 viendra en appui contre l'électro-aimant 11. Le robinet étant alors ouvert, le brûleur B sera allumé par la flamme F qui chauffera la soudure 13 du thermocouple 12. Il est à préciser ici que lors de l'actionnement du poussoir 6, la valve 18 du piston 17 s'ouvrira.

Il est important de remarquer ici qu'il est inutile de maintenir la poussée sur le poussoir 6 pendant une dizaine de secondes de façon à permettre l'accrochage du clapet 4 par sa pastille 10 sur l'électro-aimant 11 sous l'effet du courant thermo-électrique qui sera engendré progressivement par le chauffage du thermocouple, comme cela était le cas dans les robinets antérieurement connus.

En effet, il suffira de n'appuyer qu'un très bref instant sur le poussoir 6, puisqu'en relâchant ce poussoir, le troisième ressort 14 formant ressort de compensation, et le contrôle du débit par l'orifice calibré 19 (la valve 18 étant fermée) permettront un retour lent du piston 17, et par conséquent un maintien de l'appui de la pastille 10 contre l'électro-aimant 11 pendant un temps suffisant pour permettre l'accrochage du clapet 4 sur ledit électro-aimant.

En d'autres termes, ce retour lent permet de maintenir en contact la pastille métallique 10 avec l'électro-aimant 11, et par conséquent de réaliser l'accrochage de cette pastille 10 sur cet électro-aimant, même si cet accrochage n'a lieu qu'après quelques secondes, comme on peut le comprendre, en se reportant à la figure 3.

Au-delà d'une certaine limite, c'est-à-dire lorsque le poussoir 6 parviendra à sa position de fin de course sous l'effet de la force de compression du premier ressort 7 sur le piston 17 solidaire de la tige 6, l'extrémité active ou embout 15 du poussoir 6 quittera le clapet 4 qui demeurera accroché à l'électro-aimant 11, car, à ce moment là, le courant électrique engendré par le thermocouple 12 sera suffisant pour exciter cet électro-aimant de façon à retenir le clapet 4 par sa pastille 10, comme on le voit bien sur la figure 4.

Autrement dit, la veilleuse F fonctionnera et la sécurité constituée par le clapet 4 sera armée. Si un incident se produit, c'est-à-dire si par exemple la flamme de la veilleuse F est soufflée le courant parvenant à l'électro-aimant 11 sera interrompu, et le clapet 4, sous l'effet du ressort 9 retombera sur son siège 5 pour obturer l'arrivée de gaz, et on reviendra à la position visible sur la figure 1. Ainsi, grâce à l'action combinée du ressort de compensation 14 et d'un orifice calibré 19 ménagé dans le piston 17 solidaire du poussoir 6, on supprime avantageusement le temps d'inertie à l'allumage. En outre, ces moyens, peu coûteux, permettent avantageusement de s'affranchir de toutes modifications du thermocouple, du circuit électrique de raccordement du "bouchon magnétique" constitué par l'ensemble clapet 4 - électro-aimant 11, et du bouchon magnétique lui-même.

On a donc réalisé suivant l'invention un robinet pour gaz perfectionné qui demeure néanmoins d'une conception mécanique très simple et est à commande rapide.

Bien entendu, l'invention n'est nullement limitée au mode de réalisation décrit et illustré qui n'a été donné qu'à titre d'exemple.

## Revendications

1. Robinet pour gaz équipé d'un système de sécurité à thermocouple et comprenant un corps (1) muni d'une entrée (2) et d'une sortie (3) de gaz et dans lequel est agencé un clapet (4) qui peut être actionné par un poussoir (6) à l'encontre de la force d'un premier ressort (7) associé audit poussoir et d'un deuxième ressort (9) associé au clapet (4) et le sollicitant constamment en position de fermeture, de façon, qu'en actionnant le poussoir (6) ledit clapet soit armé par retenue, en position d'ouverture, contre un électro-aimant (11) associé au thermocouple (12) dans lequel passe un courant produit par une flamme chauffant ce thermocouple, caractérisé en ce que le poussoir (6) comporte une extrémité active de longueur variable grâce à un troisième ressort (14) qui est interposé entre le fond (15a) d'un embout tubulaire (15) et l'extrémité (6a) d'une tige formant le poussoir (6) et susceptible de coulisser dans cet embout, lequel embout est monté coulissant au travers d'une cloison (16) agencée dans le corps (1) du robinet et sur laquelle prend appui une extrémité du premier ressort (7), dont l'autre extrémité prend appui sur un piston (17) coulissant dans le corps (1) et solidaire de la tige formant le poussoir (6).

2. Robinet selon la revendication 1, caractérisé en ce que le piston précité (17) comporte une valve (18) et un orifice calibré (19) pour contrôler le retour à la position inactive du poussoir (6) sous l'effet du premier ressort (7), après relâchement du poussoir.

3. Appareil, tel que cuisinière ou four à gaz, table chauffante ou analogue muni d'un robinet selon la revendication 1 ou 2.

## Patentansprüche

1. Mit einem Sicherheitssystem mit Thermoelement ausgerüsteter Gashahn, mit einem, mit einem Gaseinlass (2) und-auslass (3) versehenen Körper (1) in welchem ein Ventil (4) angeordnet ist, das durch einen Stössel (6) entgegen der Kraft einer ersten dem besagten Stössel zugeordneten Feder (7) und einer zweiten dem Ventil (4) zugeordneten und dieses ständig zur Schliessstellung hin beaufschlagenden Feder (9) derart betätigt werden kann, dass bei Betätigung des Stössels (6), das besagte Ventil durch Zurückhaltung in Offenstellung an einem der Thermoelement (12) zugeordneten Elektromagneten (11) beaufschlagt wird, in welchem Thermoelement ein durch eine dieses Thermoelement erwärmende Flamme erzeugter Strom fliesst, dadurch gekennzeichnet, dass der Stössel (6) ein wirksames Ende mit veränderlicher Länge dank einer dritten Feder (14) aufweist, welche dritte Feder zwischen dem Boden (15a) eines rohrförmigen Endstückes (15) und dem Ende (6a) einer den Stössel (6) bildenden und in diesem Endstück gleitbaren Stange angeordnet ist, welches Endstück gleitbar durch eine in dem Körper (1) des Hahns angeordnete Trennwand (16) hindurch angeordnet ist, an welcher sich ein Ende der ersten Feder (7) abstützt, deren anderes Ende sich an einem in dem Körper (1) gleitenden und mit der den Stössel (6) bildenden Stange fest verbundenen Kolben (17) abstützt.

2. Hahn nach Anspruch 1, dadurch gekennzeichnet, dass der vorgenannte Kolben (17) ein Ventil (18) und eine geeichte Oeffnung (19) aufweist, um die Rückführung des Stössels (6) in die unwirksame Stellung unter der Wirkung der ersten Feder (7) nach der Freigabe des Stössels zu kontrollieren.

3. Mit einem Hahn gemäss dem Anspruch 1 oder 2 versehenes Gerät wie Küchenherd oder Gasofen, Heiztisch oder dergleichen.

## Claims

1. Gas cock fitted with a thermocouple safety system and comprising a body (1) provided with a gas inlet (2) and outlet (3) and in which is arranged a valve (4) which may be actuated by a pusher (6) against the force of a first spring (7) associated with the said pusher and of a second spring (9) associated with the valve (4) and urging it contantly into closing position so that upon actuating the pusher (6) the said valve be set through being retained in the opening position against an electromagnet (11) associated with the thermocouple (12) in which is passing a current produced by a flame heating this thermocouple, characterized in that the pusher (6) comprises one active end with a variable length owing to a third spring (14) which is interposed between the bottom (15a) of a tubular end part (15) and the end (5a) of a rod forming the pusher (6) and adapted to slide within this end part, which end part is slidably mounted through a partition wall (16) arranged in the body (1) of the cock and upon which is bearing one end of the first spring (7) the other end of which is bearing upon a piston (17) sliding in the body (1) and made fast to the rod forming the pusher (6).

2. Cock according to claim 1, characterized in that the aforesaid piston (17) comprises a valve (18) and a gauged orifice (19) to control the return of the pusher (6) to the inoperative position under the effect of the first spring (7) after the release of the pusher.

3. Apparatus such as a gas stove or oven, heating table or the like provided with a cock according to claim 1 or 2.

**Fig. 1**

**Fig. 2**

**Fig. 3**

**Fig. 4**